(19) Europäisches Patentamt
European Patent Office
Office européen des brevets

(11) EP 2 557 841 A1

(12) EUROPEAN PATENT APPLICATION

(43) Date of publication:
**13.02.2013 Bulletin 2013/07**

(51) Int Cl.:
**H04W 36/00** (2009.01)

(21) Application number: **11306026.3**

(22) Date of filing: **09.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Wong, Shin Horng**
**Chippenham Wiltshire SN14OSP (GB)**

• **Puddle, Nicola**
**Swindon Wiltshire SN4 OND (GB)**

(74) Representative: **2SPL Patentanwälte**
**Postfach 15 17 23**
**80050 München (DE)**

Remarks:
Amended claims in accordance with Rule 137(2) EPC.

(54) **Method and apparatus for flexible inter-frequency or inter-system measurements**

(57) Embodiments relate to methods and apparatuses for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel. Embodiments assign (11) a flexible number of measurement occasions for the inter-frequency and/or inter-system measurements to the mobile station (31), wherein a measurement occasion is a time period during which a data transmission from the wireless communication network to the mobile station (31) is suspended.

Fig. 5

EP 2 557 841 A1

## Description

Embodiments of the present invention generally relate to wireless communications and, more specifically, to methods and apparatuses for flexible inter-frequency and/or inter-system measurements.

Background

Wireless communication networks are steadily growing with an increasing number of systems for mobile communication being deployed. Today, wireless mobile communication networks based on various underlying Radio Access Technologies (RATs) are available. Second generation (2G) mobile communication systems, such as e.g. GSM/EDGE (Global System for Mobile Communications/Enhanced Data Rates for GSM Evolution), are based on a combined TDMA/FDMA (Time Division Multiple Access/Frequency Division Multiple Access) scheme. Third generation (3G) mobile communication systems, such as UMTS (Universal Mobile Telecommunications System) or CDMA2000 (IS-2000), are based on code division multiple access (CDMA) technology. Newer mobile communication technologies, such as e.g. WiMAX (Worldwide Interoperability for Microwave Access) or 3GPP (3rd Generation Partnership Project) Long Term Evolution (LTE), are based on orthogonal frequency division multiplexing (OFDM) technologies. LTE, e. g., uses OFDMA in the downlink and single carrier frequency division multiple access (SC-FDMA) in the uplink.

In order to effectively use the various co-existing radio access technologies, interoperability techniques for seamlessly handing over established circuit- or packet-switched communications links to a mobile device from one RAT to another RAT are required.

Although embodiments of the present invention are in principle also applicable to other wireless communication systems, the following description will, only for exemplary reasons, focus on the wireless communication systems GSM, UMTS, and LTE.

In the UMTS system, a Wideband Code Division Multiple Access (WCDMA) system, a mobile station, also referred to as User Equipment (UE) in the 3GPP standards, that has a RRC (Radio Resource Control) connection with a base station (NodeB), can transmit and receive user traffic in various RRC states, e.g. in the Cell_DCH (Dedicated Channel) and Cell_FACH (Forward Access Channel) states.

The Cell_DCH state is characterized by an allocation of a circuit-switched Dedicated Physical Channel (DPCH) to the mobile station in uplink and downlink direction, respectively, wherein uplink refers to the communication direction from the mobile station to the base station, and downlink refers to the communication direction from the base station to the mobile station. Circuit switching is a telecommunications technology by which two network nodes establish a dedicated communications channel (circuit) before the nodes may communicate. The circuit remains connected for the duration of the communication session. The circuit functions as if the nodes were physically connected as with an electrical circuit. Further, during Cell_DCH state the mobile station is known on radio cell level according to its current active set, which is defined as the set of base stations the mobile station is simultaneously connected or registered to (i.e., the UTRA (UMTS Terrestrial Radio Access) cells currently assigning a downlink DPCH to the UE constitute the active set). Also, in Cell_DCH state dedicated transport channels, downlink and uplink (TDD; Time Division Duplex) shared transport channels, and a combination thereof can be used by the mobile station.

Instead, no dedicated physical channel is allocated to the mobile station in Cell_FACH state, in which the mobile station continuously monitors a packet-switched Forward Access Channel (FACH) or receives a packet-switched High-Speed Downlink Shared Channel (HS-DSCH) in the downlink. Packet switching is a digital networking communications method that groups all transmitted data - regardless of content, type, or structure - into suitably sized blocks, called packets. Packet switching features delivery of variable-bit-rate data streams (sequences of packets) over a shared network. When traversing network adapters, switches, routers and other network nodes, packets are buffered and queued, resulting in variable delay and throughput depending on the traffic load in the network. In Cell_FACH state the mobile station is assigned a default common or shared transport channel in the uplink (e.g. RACH, i.e. Random Access Channel) that it can use anytime according to the access procedure for that transport channel. Also, the position of the mobile station is known by UTRAN (UMTS Terrestrial Radio Access Network) on cell level according to the cell where the mobile station last made a cell update. In TDD mode, one or several USCH (Uplink Shared Channel) or DSCH (Downlink Shared Channel) transport channels may have been established. The Cell_FACH state is usually used for low and bursty packet-switched traffic activity whilst Cell_DCH state is for high and often circuit-switched traffic activity.

Mobility of the mobile station in Cell_FACH state is performed via a so-called cell reselection process. This process is started when a serving cell's signal quality drops below a predefined signal quality threshold. The mobile station measures pilot signals of its neighbor cells and compares them to its serving cell. If a neighbor cell's signal quality is better than that of the mobile station's serving cell by a predetermine threshold for a time period of $T_{RESELECTION}$ seconds, the mobile station would reselect to the respective neighbor cell. The mobile station performs this task autonomously, i.e. the cell reselection decision is done at the mobile station. In contrast, the network executes a handover process on a mobile station in Cell_DCH state.

Currently, a mobile station in Cell_FACH state is able to reselect to an intra-frequency cell, an inter-frequency cell and a cell in a legacy system, such as e.g. GSM. However, the mobile station in Cell_FACH state is unable to reselect to a cell in the presently deployed and upcoming LTE system since it is assumed that Cell_FACH is a temporary state and a mobile station can move from WCDMA to LTE via a directed handover from the network in the Cell_DCH state or reselection in RRC states Cell_PCH, URA_PCH or Idle. Since Cell_FACH is more efficient in handling bursty traffic, which is typical for smartphones, the number of mobile stations and their duration in Cell_FACH state are expected to increase. Hence, a large percentage of mobile stations would not be able to reselect from UMTS to LTE if there is no mechanism to reselect to LTE from the Cell_FACH state.

As described above, cell reselection requires a mobile station to perform measurements on a potential target neighbor cell. In order to measure a target cell of different frequency and/or RAT, a mobile station with a single receiver (or searcher) needs to stop its current reception from its serving cell so that it can tune its receiver to another frequency to measure the signal of the target neighbor cell. A mobile station in Cell_FACH state is given predetermined, i.e. fixed measurement occasions or events, which are time periods in which it can interrupt its reception from its serving cell to tune to another frequency or RAT to measure a neighbor cell in that frequency or RAT. The System Frame Number (SFN) in which a mobile station can have an inter-frequency/inter-RAT measurement occasion is given by

$$SFN \textbf{ DIV } N = C\_RNTI \textbf{ MOD } M\_REP + (n \times M\_REP) , \qquad (1)$$

wherein N is the time period of a measurement occasion in number of (e.g.10 ms) radio frames, $C\_RNTI$ is the Cell Radio Network Temporary Identifier, which is a UE identifier known at the cell level, and $M\_REP$ is a measurement occasion cycle length calculated as $2^k$. The value k is broadcast by the base station and is the cycle in which a measurement occasion occurs. That is, currently a measurement occasion of N frames occurs every $N \times M\_REP$ radio frames.

The measurement occasions balance the performance of a mobile station service (i.e. throughput) against the performance of measuring an inter-frequency cell of possibly a different RAT. A measurement occasion that is too frequent would degrade the mobile station's service. However, if it is too infrequent, it may provide poor measurements leading to an inappropriate reselection choice. A network operator would have tuned the measurement occasion, i.e. the k factor, for its network. If LTE measurements are included, the operator may have to degrade its measurement performance to its existing cells (e.g. inter-frequency WCDMA and GSM cells).

In Release 8 of the 3GPP specifications, a high priority layer inter-RAT and/or inter-frequency measurement was defined. This allows the network to prioritise one type of measurement over another. For example, it may deem inter-frequency Frequency Division Duplex (FDD) cells of higher priority than legacy GSM cells. The mobile station performs high priority search when its serving cell signal strength is above a predefined threshold $S_{prioritysearch}$, i.e., when the mobile station is not at the edge of its serving cell. This allows the mobile station e.g. to move into hot-spot cells that can offer higher throughput, and which are identified as priority.

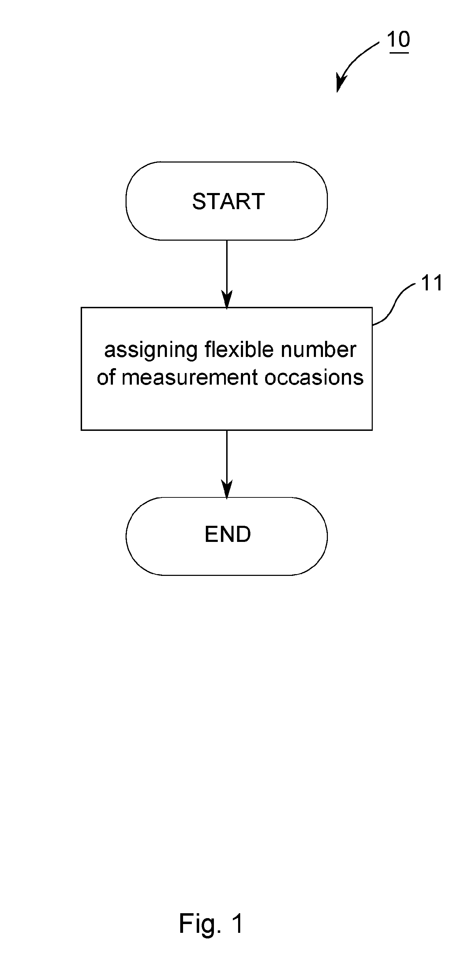

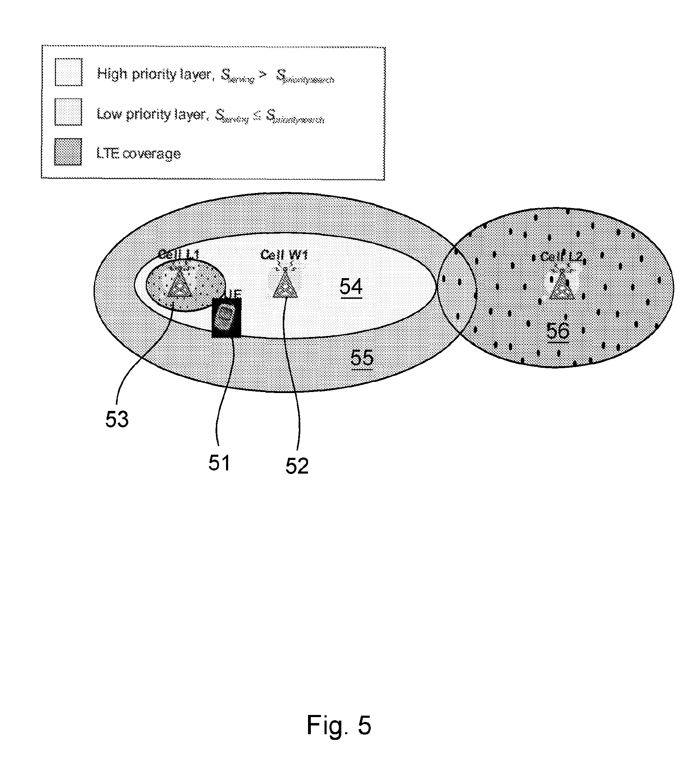

A proposal has been made in which LTE measurements is one of the high priority layer measurement region. Presently the mobile station would hence only measure LTE cells when it is not at the edge of the serving cell and therefore would not affect the existing measurement performance for cell reselection to the existing network. This is shown in Fig. 5, where a mobile station 51 is attached to a WCDMA Cell W1 (reference numeral 52) in Cell_FACH state. The serving (WCDMA) cell signal strength $S_{serving}$ is higher than the $S_{prioritysearch}$ threshold. The mobile station 51 hence starts to use its measurement occasions for LTE cell measurements. This would enable it to detect a hot spot LTE cell 53 within the area as shown in Fig. 5, that is served by LTE Cell L1. When the mobile station 51 moves out of the high priority layer measurement region 54 (i.e. $S_{serving} \leq S_{prioritysearch}$) into the low priority layer measurement region 55, the mobile station 51 will stop LTE measurements but uses its measurement occasions for inter-frequency WCDMA cells and/or GSM cells. Hence, the LTE measurements in the scenario of Fig. 1 do not disrupt the measurements on the existing cells.

The problem with the method described referring to Fig. 5 is that the mobile station 51 is unable to perform cell reselection to LTE if it is not within the high priority layer measurement region 54. Hence, a LTE cell coverage that does not fall into the high priority layer region 54, e.g. coverage from LTE Cell L2 (reference numeral 56) in Fig. 5, the mobile station 51 is unable to measure and reselect to it. Also, the mobile stations outside of the high priority layer region 54 have a greater need to reselect than those within that region since the mobile stations can potentially lose their connection. It is possible that the existing network, to which the mobile station 51 can reselect to (i.e. inter-frequency WCDMA and GSM), may not be the best cell but the (new) LTE cell 56 offers the best coverage.

Hence, it would be desirable to enable or improve e.g. LTE measurements in Cell_FACH state , in particular in cell-edge regions, and to minimise impact to current measurement performance.

Summary

The inter-frequency/inter-RAT measurements performed in Cell_FACH (or Cell_DCH) state are affected by three constraints:

    1. Number of inter-RATs and inter-frequency networks,
    2. The performance requirement, e.g., the number of measurement attempts and time required to detect and measure a cell, and
    3. The available number of measurement occasions.

Suppose a fixed number of measurement occasions: The higher the number of inter-RAT and inter-frequency networks, the less opportunity a mobile station has to measure each network. The higher the performance requirement, for a given number of measurement occasions, the number of networks to measure needs to be reduced in order to meet these requirements. Currently the third constraint above, i.e., number of measurement occasions (or measurement events), is fixed according to Equation (1).

Embodiments of the present invention may be based on the finding to allow a flexible or variable number of measurement occasions (per time interval) in order to enable or improve additional LTE measurements, in particular in Cell_FACH state. This may allow a network operator to manage the three constraints mentioned above. A mobile station with more measurement occasions than known from the prior-art can therefore perform additional inter-frequency/inter-RAT measurements on another network, as e.g. LTE. Embodiments of the present invention may, e.g., be beneficial in cell-edge regions, typically constituting low priority layer measurement regions.

Embodiments provide a method for assigning or prompting inter-frequency measurements within a wireless communication network of a first radio access technology or inter-system measurements from the first radio access technology to a second radio access technology in a state of a mobile station associated to the wireless communication network, in which the mobile station receives a downlink transport channel, the method comprising assigning, to the mobile station, a flexible or variable number of measurement occasions (and/or information indicative thereof) for the inter-frequency and/or inter-system measurements, wherein a measurement occasion is a time period during which a data transmission from the wireless communication network to the mobile station is suspended. During this time period the mobile station may then perform the inter-frequency and/or inter-system measurements.

Although not limited thereto, the wireless communication network may be a WCDMA or UMTS network in some embodiments. As has been described above, inter-frequency and/or inter-system (inter-RAT) measurements are necessary in UMTS cells for reselecting to either other UMTS or different RAT cells, like, e.g. GSM or LTE cells. Of course, principles of embodiments may also be transferred to other wireless communication networks, such as CDMA2000 and its predecessor and successor technologies.

A transport channel denotes an interface between the Medium Access Control (MAC) layer and the Physical Layer (or Layer 1), while logical channels are interface between MAC and RLC (Radio Link Control). The logical and transport channels define what data are transported, while physical channels define how and with what physical characteristic the data are transport. Transport channels may be further subdivided into common transport channels and dedicated transport channels.

According to some embodiments the downlink transport channel may be a downlink Dedicated Channel (DCH) carrying dedicated user data and control information in a circuit-switched transmission mode. In such scenarios the mobile station is in Cell_DCH state. During or before an inter-frequency handover the mobile station may be given time to perform necessary measurements on the different radio resources, like, e.g. different carrier frequencies. One or multiple slots per radio frame may be allocated for the mobile station to perform the measurements, leading to so-called compressed frames in a compressed mode scenario. These measurement slots or measurement occasions can either be in the middle of a single radio frame or spread over two consecutive radio frames. Embodiments additionally allow a flexible or variable configuration of the compressed frames adaptive to various inter-frequency and/or inter-RAT measurement scenarios. In one embodiment the mobile station may request for additional or less compressed mode measurement resources depending on the complexity of the required inter-frequency/inter-RAT measurements.

In other embodiments the downlink transport channel may be a common transport channel carrying signaling and/or user data for the mobile station in a packet-switched transmission mode, like, e.g., a downlink Forward Access Channel (FACH) or the High-Speed Downlink Shared Channel (HS-DSCH) in UMTS. In such scenarios the mobile station hence is in Cell_FACH state. As has been explained above, measurement occasions may be used to control a mobile station's measurement activities on inter-frequency and inter-RAT radio cells while the mobile station is in Cell_FACH state. In embodiments, the measurement occasions, i.e. the measurement occasion cycle length $M\_REP$ or measurement occasion frequency, may be flexibly or variably configured to allow for a more flexible measurement of some parameters that cannot be measured while simultaneously receiving the physical channel carrying the FACH (e.g. S-CCPCH, Secondary Common Control Physical Channel) of the serving cell in Cell_FACH state. Cell_FACH measurement occasions may create flexible, i.e. variable, transmission gaps in the physical channel carrying the FACH or HS-DSCH sent from the network when the UE is in Cell_FACH state.

Originally, inter-frequency and inter-RAT reselections in the UTRAN were based on the same ranking as intra-frequency reselections. It was seen that this is very difficult for the network to control as measurement quantities of different RATs are different and that the network needs to be able to control reselection between multiple RATs. And, as it was seen that that network operators would like to control how a mobile station (or UE) prioritizes camping on different RATs or frequencies of eUTRAN (evolved UMTS Terrestrial Radio Access Network), which is the is the air interface of 3GPP's LTE, an absolute priority based reselection method has been chosen. Each priority layer is given a priority and based on this information the mobile station tries to camp on the highest priority frequency/RAT if it can provide decent service. In order for the mobile station to decide if decent service can be provided the network allocates each frequency/RAT a threshold ($Thresh_{x,high}$) which has to be fulfilled before reselection to such layer is performed. A similar $T_{RESELECTION}$ as in intra-frequency reselections is utilized, i.e. a new layer needs to fulfill the threshold for consecutive time of $T_{RESELECTION}$ before reselection is performed. This is used to eliminate reselections if just temporary fading for the evaluated frequency occurs. To make reselection to a lower priority layer the mobile station will not reselect to that if the higher priority layer is still above the threshold or if the lower priority layer (frequency or RAT) is not above another threshold ($Thresh_{X,low}$).

In some embodiments assigning the flexible number of measurement occasions comprises assigning a first number of measurement occasions to be used for a first inter-frequency and/or inter-system priority layer (i.e. a first priority layer measurement region), and assigning a second number of measurement occasions to be used for a second inter-frequency and/or inter-system priority layer (i.e. a second priority layer measurement region), wherein the first number is different from the second number, and wherein the first inter-frequency and/or inter-system priority layer is different from the second inter-frequency and/or inter-system priority measurement layer. Preferably, the first inter-frequency and/or inter-system priority layer for inter-RAT and/or inter-frequency measurements is lower than the second layer, but the first number of measurement occasions (per time) is higher than the second number. The low-priority layer region for the inter-RAT and/or inter-frequency measurements may be geographically located at a serving cell's edge region close to the coverage area of neighbor cells. For example, the serving cell may be based on UMTS network technology, whilst neighbor cells may be based on GSM/EDGE and/or LTE network technologies. The assignment of more measurement occasions at the cell edge, i.e. in the low priority layer measurement region, compared to the cell center (high priority layer measurement region) allows to cover more inter-frequency and/or inter-system measurements including legacy as well as successor radio access network technologies.

In some embodiments the assignment or allocation of the variable or flexible number of measurement occasions may be initiated by the wireless network, i.e. a base station, a Radio Network Controller (RNC) or a combination thereof. According to other embodiments, however, the assignment of the variable or flexible number of measurement occasions per time interval may as well be inititiated by the mobile station, such that assigning the flexible number of Cell_FACH measurement occasions or Cell_DCH compressed mode comprises the mobile station, currently having a first number of measurement occasions assigned to it, requesting the wireless communication network to assign a second number of measurement occasions to said mobile station, the second number being different from the first number. Such a mobile station driven request for a new and different number of measurement occasions may e.g. happen in response to a change of the priority layer measurement region the mobile station is located in. For example, if the mobile station moves from a higher priority layer (e.g. close to the cell center) into a lower priority layer (e.g. close to the cell edge) the mobile may request a higher number of measurement occasions to allow for extensive neighbor cell measurements, possibly including many inter-frequency and/or inter-RAT measurements covering legacy and/or advanced RATs.

In further embodiments, the wireless communication network may signal, via dedicated signaling, a different number of measurement occasions to a particular mobile station than formerly broadcasted to said particular and other mobile stations. Measurement occasions cause the mobile station to interrupt reception from its serving cell, hence degrade the mobile station's data throughput. Typically the wireless communication network is aware of a mobile station's downlink traffic activity. For that reason it may offer the mobile station more measurement occasions, i.e. a higher number, in case of low mobile station downlink traffic activity. In the contrary case, i.e. in case of high mobile station downlink traffic activity, the network may withdraw some of the formerly assigned measurement occasions from the mobile station. In other words, assigning the flexible number of measurement occasions may comprise signalling, from the wireless communication network to the mobile station, a second number of measurement occasions to said mobile station, wherein the second number is different from a first number of measurement occasions having been broadcasted from the wireless communication network to its attached mobile stations before. The second number may be signalled in response to the mobile station's downlink traffic activity, such that the mobile station may perform more inter-frequency and/or inter-system measurements in case of a low downlink traffic activity or, such that the mobile station may perform less inter-frequency and/or inter-system measurements in case of a high downlink traffic activity.

In yet other embodiments the wireless communication network may preconfigure the mobile station to operate in a flexible measurement occasions mode. This flexible measurement occasions mode may be entered either in Cell_DCH or Cell_FACH state of the mobile station. A base station, i.e. wireless communication network element, may send a Layer-1 order (e.g. via HS-SCCH, High Speed Shared Control Channel) indicative of a new (updated) number of measurement occasions to the mobile station. Such an embodiment recognizes that the base station schedules the mobile station's traffic and has intimate knowledge of the mobile station's activity. Therefore the wireless communication network is in the best position to change the number of measurement occasions depending the mobile station's situation. It also allows the wireless communication network to respond to a mobile station's request for more or less measurement occasions. Hence, assigning the flexible number of measurement occasions may comprise, either in a state of the mobile station, in which a DPCH is allocated to the mobile station or in the state of the mobile station, in which the mobile station continuously monitors a common transport channel (e.g. FACH, HS-DSCH), preconfiguring the mobile station to operate at a flexible or variable (i.e. reconfigurable) number of measurement occasions.

In a yet further embodiment several, i.e. at least two, different numbers of measurement occasions may be broadcast by the wireless communication network to at least some of its associated mobile stations. That is, in addition to a default number or cycle of measurement occasions, the wireless communication network may also broadcast further and different numbers indicative of measurement occasions to be used by the mobile station under different than the default conditions. Assigning the flexible number of measurement occasions may hence comprise signalling a plurality of different numbers of Cell_FACH measurement occasions to the mobile station, wherein each of the plurality of different numbers is related to a different condition or location of the mobile station.

An example condition is to have the mobile station use a larger number of measurement occasions when the mobile station is in a lower priority region. Since the number of measurement occasions (3rd constraint) is increased, the measurement performance (2nd constraint) may be maintained despite the addition of an LTE network (1st constraint) into the inter-frequency and/or inter-system measurements. That is, in a first condition the mobile station uses a larger number of measurement occasions, when the mobile station is in a priority layer for inter-frequency and/or inter-system measurements having a lower priority than the serving cell priority, compared to a number of measurement occasions, when the mobile station is in a priority layer region having a priority equal to or higher than the serving cell priority. In other words, in the first condition the mobile station uses a larger number of measurement occasions when the mobile station is in a low layer measurement region, where the signal strength $S_{serving}$ is equal to or less than the threshold $S_{prioritysearch}$, compared to a number of measurement occasions, when the mobile station is in high layer measurement region, where the signal strength $S_{serving}$ is larger than the threshold $S_{prioritysearch}$. Such embodiments may affect a base station scheduling since the mobile station may change its measurement occasion cycles according to the different numbers of measurement occasions autonomously. Hence, a further step is for the mobile station to inform the wireless communication network of its change in measurement occasion cycles. Some embodiments of the method for assigning inter-frequency measurements may hence comprise informing the wireless communication network of the usage of a certain number of the plurality of different numbers of Cell_FACH measurement occasions and/or Cell_DCH compressed mode in case of the mobile station being in a certain measurement condition or priority layer measurement region related to the certain number.

Yet further embodiments also provide various apparatuses for assigning or prompting inter-frequency and/or inter-RAT measurements which are adapted by hardware (e.g. electrical circuitry) to perform various embodiments of the method for assigning or prompting inter-frequency and/or inter-RAT measurements. Some embodiments comprise digital control circuits installed within the apparatus' electrical circuitry. Such a digital control circuit, e.g. a digital signal processor (DSP), needs to be programmed accordingly. Hence, yet further embodiments also provide a computer program having a program code for performing at least a step of embodiments of the aforementioned method, when the computer program is executed on a computer or a digital processor.

In one embodiment an apparatus is provided for assigning or prompting inter-frequency measurements within a wireless communication network of a first radio access technology or inter-system measurements from the first radio access technology to a second radio access technology in a state of a mobile station associated to the wireless communication network, in which the mobile station receives a downlink transport channel, the apparatus comprising means for assigning a flexible or variable number of measurement occasions for the inter-frequency and/or inter-system measurements to the mobile station, wherein a measurement occasion is a time period during which a data transmission from the wireless communication network to the mobile station is suspended. Such a network apparatus may be comprised by wireless communication network hardware, such as radio base stations, RNCs, or a combination thereof.

Further, it is provided an apparatus for assigning or prompting inter-frequency measurements within a wireless communication network of a first radio access technology or inter-system measurements from the first radio access technology to a second radio access technology in a state of a mobile station associated to the wireless communication network, in which the mobile station receives a downlink transport channel, the apparatus comprising means for flexibly/variably performing the inter-frequency and/or the inter-system measurements according to an assigned flexible number of measurement occasions for the inter-frequency and/or inter-system measurements, wherein a measurement occasion is a time period during which a data transmission from the wireless communication network to the mobile station is suspended, or during which the wireless communication network will not send any downlink data to said mobile station.

Such apparatus-embodiments may e.g. be implemented within a mobile station device, such that a mobile station gets enabled to make use of the flexible or variable number of measurement occasions.

According to some embodiments, such a mobile station apparatus may be adapted (by corresponding means) to request the wireless communication network to assign a second number of measurement occasions to the mobile station, the second number being different from a first number of measurement occasions currently being assigned to it. This request may be based on a priority layer measurement region the mobile station is located in, on a data traffic situation of the mobile station, etc. According to alternative or additional embodiments, the mobile station apparatus may be adapted (by corresponding means) to inform the wireless communication network of the usage of a certain number of a plurality of previously assigned or signalled different numbers of Cell_FACH measurement occasions and/or Cell_DCH compressed mode in case of the mobile station being in a certain measurement condition or priority layer measurement region related to the certain number.

Embodiments of the present invention may allow a network operator to manage its Cell_FACH (or Cell_DCH) measurements occasions or events more effectively, for example. Embodiments allow additional networks (e.g. LTE) to be added to existing ones without sacrificing any existing networks or degrading the inter-frequency and/or inter-RAT measurements.

Brief description of the Figures

Some embodiments of apparatuses and/or methods will be described in the following by way of example only, and with reference to the accompanying figures, in which

Fig. 1    schematically shows a method for assigning or prompting inter-frequency/inter-RAT measurements, according to an embodiment;

Fig. 2    shows sub-steps of the assignment-step of Fig. 1, according to an embodiment;

Fig. 3    schematically illustrates a scenario making use of flexible measurement occasions, according to an embodiment;

Fig. 4    schematically shows a network-apparatus and a mobile-device-apparatus for assigning or prompting inter-frequency/inter-RAT measurements; and

Fig. 5    shows a network scenario with an LTE hot-spot cell located with an UMTS cell.

Description of Embodiments

Various example embodiments will now be described more fully with reference to the accompanying drawings in which some example embodiments are illustrated. In the drawings, the thicknesses of layers and/or regions may be exaggerated for clarity.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Fig. 1 schematically shows a method 10 for assigning or prompting inter-frequency measurements within a wireless communication network of a first radio access technology or inter-system (i.e. inter-RAT) measurements from the first radio access technology to a second radio access technology in a state of a mobile station associated to the wireless communication network, in which the mobile station receives a downlink transport channel. The method comprises a step 11 of assigning, to the mobile station, a flexible number of measurement occasions for the inter-frequency and/or inter-system measurements, wherein a measurement occasion denotes a time period during which a data transmission from the wireless communication network to the mobile station is suspended for performing the inter-frequency and/or inter-system measurements.

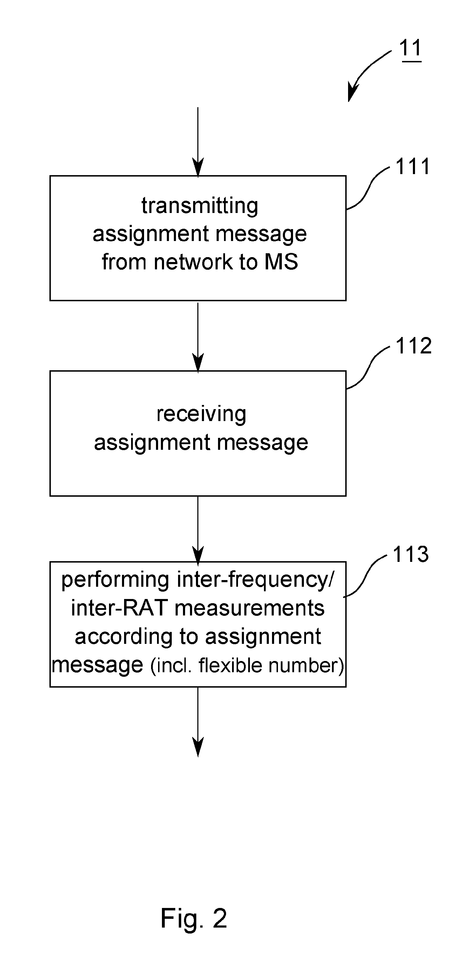

The step 11 of assigning a flexible number of measurement occasions to the mobile station may be sub-divided into further sub-steps, as illustrated in Fig. 2.

The step 11 of assigning may comprise a first sub-step 111 of sending or transmitting an assignment message from the wireless communication network to the associated or registered mobile station, wherein the assignment message may comprise an indication of a flexible/variable number of measurement occasions for the inter-frequency and/or inter-system measurements to be performed by the mobile station. Further, the step 11 of assigning may comprise a second sub-step 112 of receiving the assignment message at the mobile station. The receiving sub-step 112 may further include a step of acknowledging the correct receipt of the assignment message carrying the information on the flexible/variable number of measurement occasions towards the wireless communication network. Also, the step 11 of assigning may comprise a sub-step 113 of actually triggering inter-frequency and/or inter-system measurement circuitry of the mobile station to perform inter-frequency and/or inter-RAT measurements in accordance to the assigned flexible, variable or reconfigurable number of measurement occasions. Thereby, depending on the embodiment, the mobile station may e.g. be in Cell_FACH state conducting measurements at Cell_FACH measurement occasions. As mentioned before, there are also other embodiments related to the mobile station being in Cell_DCH state, more particularly, in compressed mode thereof.

When assigning the flexible or variable numbers to the inter-frequency and/or inter-RAT measurement occasions, a first number of measurement occasions may be used for a first (lower) priority layer measurement region, where a signal strength $S_{serving}$ of a serving cell is equal to or less than the signal strength threshold $S_{prioritysearch}$. Instead, a second number of measurement occasions may used for a second (higher) priority layer measurement region, where the signal strength $S_{serving}$ of a serving cell is larger than the signal strength threshold $S_{prioritysearch}$. Thereby the first number is different from the second number, in particular the first number may be larger than the second number.

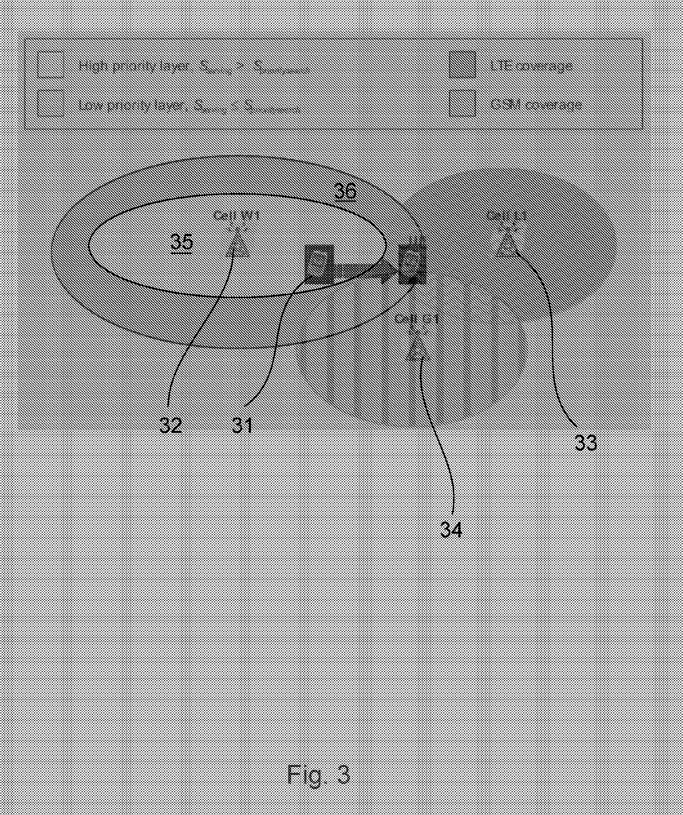

Referring now to Fig. 3 an exemplary scenario is shown comprising a mobile station (UE) 31 attached to a WCDMA base station W1, denoted by reference numeral 32. Next to the WCDMA base station or cell W1 there are located a LTE neighbor cell L1, denoted by reference numeral 33, and a GSM neighbor cell G1, denoted by reference numeral 34. The UE 31 is in Cell_FACH state and moves from a high priority layer measurement region 35 to a low priority layer measurement region 36.

WCDMA Cell W1 (32) broadcasts two different measurement occasions k values, namely $k_{DEFAULT}$ and $k_{LOW}$, and the corresponding measurement occasion cycle length $M\_REP$, $M\_REP_{DEFAULT}$ and $M\_REP_{LOW}$ as follows:

    ○ Default measurement occasion: $k_{DEFAULT} = 6$, $M\_REP_{DEFAULT} = 64$
    ○ For low priority region $(S_{serving} \leq S_{prioritysearch})$: $k_{LOW} = 5$, $M\_REP_{LOW} = 32$

The default measurement occasion is to be used by all UEs. UEs in the low priority layer measurement region 36 may, however, use a different measurement occasion setting where the number of measurement occasions in the low priority layer measurement region 36 is twice that in the default case. The UE 31 may request for the low priority layer measurement region 36 measurement occasion settings when it reaches the low priority region 36. Similarly, the UE 31 may request for the default measurement occasion settings when it moves away from the low priority region 36 into the higher priority layer measurement region 35. Hence, the step 11 of assigning the flexible number of measurement occasions may comprise the UE 31, currently having the default number of measurement occasions assigned to it, requesting the wireless communication network 32 to assign the low priority region number of measurement occasions to said UE 31, the low priority region number being different (in particular larger) from the actual number. In response to this request the step 11 of assigning the flexible number of forward measurement occasions may also comprise signalling, from the wireless communication network 32 to the UE 31, information indicative of the low priority region number of measurement occasions to said UE 31 (e.g. $k_{LOW}$, $M\_REP_{LOW}$), wherein the low priority region number is different from the default number of measurement occasions having been broadcasted (or information indicative thereof) within the wireless communication network 32 to its attached UEs before.

According to other embodiments the low priority region number of measurement occasions (or information indicative thereof) could also be signalled to the UE 31 alternatively or additionally in response to the UE's downlink traffic activity, such that the UE 31 may perform more inter-frequency and/or inter-system measurements in case of a low downlink traffic activity, or, such that the UE 31 may perform less inter-frequency and/or inter-system measurements in case of a high downlink traffic activity.

In yet further embodiments the flexible number of measurement occasions may also be assigned to the UE 31, either being in Cell_FACH state or in Cell_DCH state, by preconfiguring the UE 31 to operate at flexibly configurable FACH measurement occasions or DCH measurement occasions (compressed frames), wherein assigning the flexible number of measurement occasions comprises signalling a plurality of different numbers of measurement occasions (or information indicative thereof) to the UE 31, wherein each of the plurality of different numbers may be related to a different condition of the UE 31. For example, a condition of the UE 31 may depend on the priority layer measurement region it is located in, or may depend on its downlink traffic activity. For example, in a first condition the UE 31 may use the low priority region number of measurement occasions when the mobile station is in the low priority layer measurement region 36 compared to the default number of measurement occasions when the mobile station is in the high priority layer measurement region 35.

In case of the pre-configuration of the UE 31 with a plurality of possible numbers of measurement occasions for different scenarios embodiments may further comprise informing the wireless communication network 32 of the usage of a certain number of the plurality of different numbers of Cell_FACH measurement occasions or Cell_DCH compressed mode in case of the mobile station being in a certain condition or scenario related to the certain number.

The wireless communication network landscape of Fig. 3 also includes an LTE network 33 as one of the networks to be measured by the UE 31 in CELL_FACH state in the low priority region 35. The UE 31 will only perform inter-RAT LTE measurements if it is granted a higher number of measurement occasions by the wireless communication network 32.

The UE 31 may start off with a measurement occasion cycle of $M\_REP_{HIGH}$ = 64 whilst being located in the high priority region 35 and perform measurements for possible hot spot networks located therein. Exemplarily it is assumed that it does not find any hot spot network and does continue to move in the direction of the low priority region 36, as indicated in Fig. 3. When the UE 31 moves into the low priority region 36, it may request for more measurement occasions. The wireless network 32 may thereby grant the UE's request. The UE 31 thus may e.g. double the number of measurement occasions (i.e. it may reduce the measurement occasion cycle length to 32). It may then perform measurements on other networks to find LTE cell L1 (33) and GSM cell G1 (34). The UE 31 may continue to move into LTE cell L1 (33) and find that it meets the cell reselection criteria (i.e. signal strength of cell L1 is better than that of the serving cell W1 by a threshold for $T_{RESELECT}$ seconds). In this case the UE 31 may reselect to LTE cell L1 (33).

If there were no additional measurement occasions in the example of Fig. 3, either the LTE network 33 or the GSM network 34 would need to be removed from the list of networks to measure in order to maintain the conventional measurement performance known from only measuring the legacy GSM network 34. The LTE network 33 would not be included since it would affect the existing measurement performance on the GSM (and other inter-frequency) networks. The UE 31 in this example would reselect to the GSM cell G1, which, however, might not be the best cell.

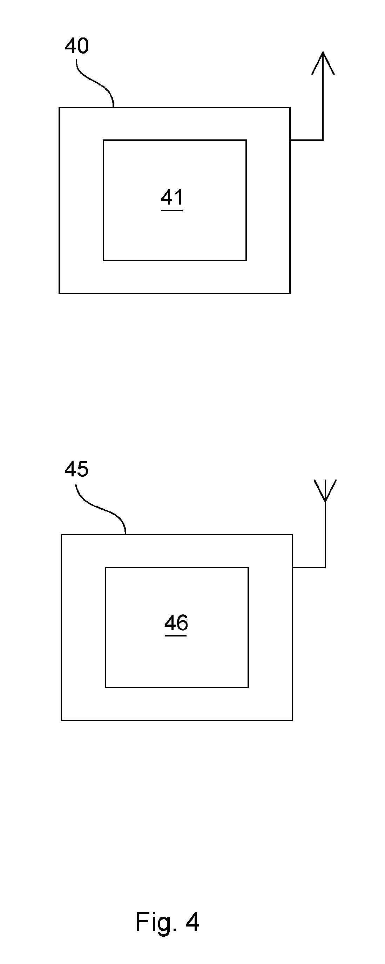

Turning now to Fig. 4 there is shown an network apparatus 40 for assigning or prompting inter-frequency measurements within a wireless communication network of a first radio access technology or inter-RAT measurements from the first radio access technology (e.g. WCDMA or UMTS) to a second radio access technology (e.g. OFDMA or LTE) in a state of a mobile station associated to the wireless communication network, in which the mobile station receives a downlink transport channel, e.g. a FACH or HS-DSCH.

The network apparatus 40 comprises means 41 for assigning a flexible or variable number of measurement occasions (or information indicative thereof) for the inter-frequency and/or inter-RAT measurements to the mobile station. As has been explained before, a measurement occasion is a time period during which a data transmission from the wireless communication network to the mobile station is suspended. The network apparatus 40 may e.g. be comprised by wireless communication network hardware, such as radio base stations, RNCs, or combinations thereof.

The network apparatus 40 may communicate with a mobile station apparatus 45 for assigning or prompting inter-frequency measurements within a wireless communication network of a first radio access technology or inter-system measurements from the first radio access technology to a second radio access technology in a state of the mobile station associated to the wireless communication network, in which the mobile station receives a downlink transport channel, e.g. a FACH or HS-DSCH in an eUTRAN.

The mobile station apparatus 45 comprises means 46 for flexibly/variably performing the inter-frequency and/or the inter-RAT measurements according to the assigned flexible number of measurement occasions (or information indicative thereof) for the inter-frequency and/or inter-RAT measurements. Such a mobile station apparatus 45 may e.g. be implemented within a mobile terminal device, such that a mobile terminal gets enabled to make use of the flexible or variable number of measurement occasions. Embodiments of the mobile station apparatus 45 may be adapted to initiate a communication related to the flexible number of measurement occasions with an associated network apparatus 40, as it may e.g. be required for requesting a different than the default number, or, when indicating, to the network apparatus 40, a change to a (pre-configured) different number than an actually used number in response to a different data load or location.

The aforementioned apparatuses 40, 45 may comprise a signal processor, respectively, executing a computer program having a program code for performing or supporting embodiments of the above described method when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

To summarize, embodiments of the present invention may enable a network operator to manage e.g. its CELL_ FACH measurement occasions more effectively. Embodiments allow additional networks (e.g. LTE) to be added next to existing ones without sacrificing any legacy networks or degrading the intra-system inter-frequency measurements.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (10) for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel, the method comprising:

   assigning (11), to the mobile station (31), a flexible number of measurement occasions for the inter-frequency and/or inter-system measurements, wherein a measurement occasion is a time period during which a data transmission from the wireless communication network to the mobile station (31) is suspended.

2. The method (10) according to claim 1, wherein the downlink transport channel is a forward access channel (FACH) or a downlink shared channel (HS-DSCH) carrying data packets of signaling data and user data for the mobile station (31).

3. The method (10) according to claim 1, wherein a first number of measurement occasions or information indicative thereof is used for a first priority layer region (35; 36), and wherein a second number of measurement occasions or information indicative thereof is used for a second priority layer region (36; 35), wherein the first number is different from the second number, and wherein a received signal strength of the mobile station (31) in the first priority layer region is located opposed relative to a signal strength threshold than a received signal strength of the mobile station (31) in the second priority layer region.

4. The method (10) according to claim 1, wherein assigning (11) the flexible number of measurement occasions comprises the mobile station (31), currently having a first number of measurement occasions assigned to it, requesting the wireless communication network (32) to assign a second number of measurement occasions to said mobile station (31), the second number being different from the first number.

5. The method (10) according to claim 4, wherein the second number is used for a lower priority layer region (36) having a priority lower than a serving cell priority, and wherein the the second number is larger than the first number, which is used for a higher priority layer region (35) having a priority equal to or higher than the serving cell priority.

6. The method (10) according to claim 1, wherein assigning (11) the flexible number of measurement occasions comprises signalling, from the wireless communication network (32) to the mobile station (31), a second number of measurement occasions or information indicative thereof to said mobile station (31), wherein the second number is different from a first number of measurement occasions having been broadcasted from the first wireless communication network (32) to its attached mobile stations before.

7. The method (10) according to claim 6, wherein the second number is signalled in response to a mobile station's data traffic activity, such that the mobile station (31) may perform more inter-frequency and/or inter-system measurements in case of a low data traffic activity, or, such that the mobile station (31) may perform less inter-frequency and/or inter-system measurements in case of a high data traffic activity.

8. The method (10) according to claim 1, wherein assigning (11) the flexible number of measurement occasions comprises, either in a state of the mobile station (31), in which a dedicated physical channel is allocated to the mobile station or in the state of the mobile station (31), in which the mobile station monitors a downlink forward access channel, preconfiguring the mobile station (31) to operate at flexible measurement occasions.

9. The method (10) according to claim 1, wherein assigning (11) the flexible number of measurement occasions comprises signalling a plurality of different numbers of measurement occasions or information indicative thereof to the mobile station (31), wherein each of the plurality of different numbers is related to a different condition or location of the mobile station (31).

10. The method (10) according to claim 9, wherein, in a first condition, the mobile station (31) uses a larger number of measurement occasions, when the mobile station (31) is in a priority layer region (36) where a serving cell signal strength is above a predefined signal strength threshold, compared to a number of measurement occasions, when the mobile station (31) is in a priority layer region (35) where a serving cell signal strength is below a predefined signal strength threshold.

11. The method (10) according to claim 9, further comprising informing the wireless communication network (32) of a usage of a certain number of the plurality of different numbers of measurement occasions in case of the mobile station (31) being in a certain condition related to the certain number.

12. The method (10) according to claim 1, wherein the first radio access technology is a WCDMA network technology, and wherein the radio access technology is an LTE network technology.

13. An apparatus (40) for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel, the apparatus comprising:

   means (41) for assigning a flexible number of measurement occasions, or information indicative thereof, for the inter-frequency and/or inter-system measurements to the mobile station (31), wherein a measurement occasion is a time period during which a data transmission from the wireless communication network to the mobile station (31) is suspended.

**14.** An apparatus (45) for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel, the apparatus comprising:

means (46) for flexibly performing the inter-frequency and/or the inter-system measurements according to an assigned flexible number of measurement occasions for the inter-frequency and/or inter-system measurements, wherein a measurement occasion is a time period during which a data transmission from the wireless communication network to the mobile station (31) is suspended.

**15.** A computer program having a program code for performing the method of claim 1, when the computer program is executed on a computer or processor.

**Amended claims in accordance with Rule 137(2) EPC.**

**1.** A method (10) for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel, the method comprising:

assigning (11), from the wireless communication network to the mobile station (31), a variable number of measurement occasions for the inter-frequency and/or inter-system measurements, wherein a measurement occasion is a time period during which a data transmission from the wireless communication network to the mobile station (31) is suspended.

**2.** The method (10) according to claim 1, wherein the downlink transport channel is a forward access channel (FACH) or a downlink shared channel (HS-DSCH) carrying data packets of signaling data and user data for the mobile station (31).

**3.** The method (10) according to claim 1, wherein an assigned first number of measurement occasions or information indicative thereof is used for a first priority layer region (35; 36), and wherein an assigned second number of measurement occasions or information indicative thereof is used for a second priority layer region (36; 35), wherein the assigned first number is different from the assigned second number, and wherein a received signal strength of the mobile station (31) in the first priority layer region is located opposed relative to a signal strength threshold than a received signal strength of the mobile station (31) in the second priority layer region.

**4.** The method (10) according to claim 1, wherein assigning (11) the variable number of measurement occasions comprises the mobile station (31), currently having a first number of measurement occasions assigned to it, requesting the wireless communication network (32) to assign a second number of measurement occasions to said mobile station (31), the second number being different from the first number.

**5.** The method (10) according to claim 4, wherein the second number is used for a lower priority layer region (36) having a priority lower than a serving cell priority, and wherein the the second number is larger than the first number, which is used for a higher priority layer region (35) having a priority equal to or higher than the serving cell priority.

**6.** The method (10) according to claim 1, wherein assigning (11) the variable number of measurement occasions comprises signalling, from the wireless communication network (32) to the mobile station (31), a second number of measurement occasions or information indicative thereof to said mobile station (31), wherein the second number is different from a first number of measurement occasions having been broadcasted from the first wireless communication network (32) to its attached mobile stations before.

**7.** The method (10) according to claim 6, wherein the second number is signalled in response to a mobile station's data traffic activity, such that the mobile station (31) may perform more inter-frequency and/or inter-system measurements in case of a low data traffic activity, or, such that the mobile station (31) may perform less inter-frequency and/or inter-system measurements in case of a high data traffic activity.

**8.** The method (10) according to claim 1, wherein assigning (11) the variable number of measurement occasions comprises, either in a state of the mobile station (31), in which a dedicated physical channel is allocated to the mobile station or in the state of the mobile station (31), in which the mobile station monitors a downlink forward access channel, preconfiguring the mobile station (31) to operate at variable measurement occasions.

**9.** The method (10) according to claim 1, wherein assigning (11) the variable number of measurement occasions comprises signalling a plurality of different numbers of measurement occasions or information indicative thereof to the mobile station (31), wherein each of the plurality of different numbers is related to a different condition or location of the mobile station (31).

**10.** The method (10) according to claim 9, wherein, in a first condition, the mobile station (31) uses a larger number of measurement occasions, when the mobile station (31) is in a priority layer region (36) where a serving cell signal strength is above a predefined signal strength threshold, compared to a number of measurement occasions, when the mobile station (31) is in a priority layer region (35) where a serving cell signal strength is below a predefined signal strength threshold.

**11.** The method (10) according to claim 9, further comprising informing the wireless communication network (32) of a usage of a certain number of the plurality of different numbers of measurement occasions in case of the mobile station (31) being in a certain condition related to the certain number.

**12.** The method (10) according to claim 1, wherein the first radio access technology is a WCDMA network technology, and wherein the radio access technology is an LTE network technology.

**13.** An apparatus (40) for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel, the apparatus comprising:

means (41) for assigning, from the wireless communication network to the mobile station (31), a variable number of measurement occasions, or information indicative thereof, for the inter-frequency and/or inter-system measurements, wherein a measurement occasion is a time period during which a data transmission from the wireless communication network to the mobile station (31) is suspended.

**14.** An apparatus (45) for assigning inter-frequency measurements within a wireless communication network of a first radio access technology or inter-system measurements from the first radio access technology to a second radio access technology in a state of a mobile station (31) associated to the wireless communication network, in which the mobile station (31) receives a downlink transport channel, the apparatus comprising:

means (46) for variably performing the inter-frequency and/or the inter-system measurements according to an assigned variable number of measurement occasions for the inter-frequency and/or inter-system measurements, which has been signaled to the mobile station (31) from the wireless communication network, wherein a measurement occasion is a time period during which a data transmission from the wireless communication network to the mobile station (31) is suspended.

**15.** A computer program having a program code for performing the method of claim 1, when the computer program is executed on a computer or processor.

Fig. 1

11

111

transmitting
assignment message
from network to MS

112

receiving
assignment message

113

performing inter-frequency/
inter-RAT measurements
according to assignment
message (incl. flexible number)

Fig. 2

**Fig. 3**

40

41

45

46

Fig. 4

Fig. 5

**EP 2 557 841 A1**

Europäisches Patentamt

European Patent Office

Office européen des brevets

# EUROPEAN SEARCH REPORT

Application Number

EP 11 30 6026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/287127 A1 (WU PING [US] ET AL) 20 November 2008 (2008-11-20) * figures 1-5 * * paragraph [0020] - paragraph [0045] * | 1-3, 13-15 | INV. H04W36/00 |
| X | RENESAS MOBILE EUROPE LTD ET AL: "Reselection from UTRAN CELL_FACH state to EUTRAN", 3GPP DRAFT; R2-113383 FACH TO LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 11 May 2011 (2011-05-11), XP050495543, [retrieved on 2011-05-12] * the whole document * | 1-5,8,9, 11-15 | |
| A | WO 2008/053245 A1 (SIEMENS AG [DE]; CHAPMAN THOMAS MALCOLM [GB]; BREUER VOLKER [DE]; ULRI) 8 May 2008 (2008-05-08) * page 5, line 14 - page 6, line 14 * | 1-15 | TECHNICAL FIELDS SEARCHED (IPC) |
| A | US 2007/183388 A1 (BREUER VOLKER [DE] ET AL) 9 August 2007 (2007-08-09) * paragraph [0007] - paragraph [0010] * * paragraph [0023] - paragraph [0026] * | 1-15 | H04W |

The present search report has been drawn up for all claims

| Place of search | Date of completion of the search | Examiner |
|---|---|---|
| Munich | 12 January 2012 | Gavin Alarcon, Oscar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**ANNEX TO THE EUROPEAN SEARCH REPORT
ON EUROPEAN PATENT APPLICATION NO.** EP 11 30 6026

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2012

| Patent document cited in search report | | Publication date | Patent family member(s) | | Publication date |
|---|---|---|---|---|---|
| US 2008287127 | A1 | 20-11-2008 | CN | 101755470 A | 23-06-2010 |
| | | | EP | 2151129 A1 | 10-02-2010 |
| | | | KR | 20100003357 A | 08-01-2010 |
| | | | RU | 2009146301 A | 20-06-2011 |
| | | | US | 2008287127 A1 | 20-11-2008 |
| | | | WO | 2008144194 A1 | 27-11-2008 |
| WO 2008053245 | A1 | 08-05-2008 | NONE | | |
| US 2007183388 | A1 | 09-08-2007 | NONE | | |

EPO FORM P0459

For more details about this annex : see Official Journal of the European Patent Office, No. 12/82